# EUROPEAN PATENT SPECIFICATION

(11) **EP 0 744 092 B1**
(45) Date of publication and mention of the grant of the patent: **28.03.2001**
(21) Application number: 94921534.7
(22) Date of filing: 15.07.1994
(51) Int. Cl.: H02G 5/04, H01R 25/14, H01B 5/04, H01B 5/10, H01B 5/16

(54) **ELECTRICAL DISTRIBUTION SYSTEM**
ELEKTRISCHES VERTEILUNGSSYSTEM
SYSTEME DE DISTRIBUTION ELECTRIQUE

(30) Priority: 20.07.1993 AU PM003693; 24.03.1994 AU PM474394
(43) Date of publication of application: 27.11.1996
(73) Proprietor: MASS INTERNATIONAL PTY. LTD., Sydney, NSW 2025 (AU)
(72) Inventor: DRURY, Lee, Andrew, Woollahra, NSW 2025 (AU)
(74) Representative: Beck, Simon Antony
(86) International application number: AU9400397
(87) International publication number: WO9503644

(56) References cited:
- AU-A- 1 180 883
- AU-A- 2 421 592
- DE-A- 3 030 449
- DE-A- 3 214 133
- DE-A- 4 013 370
- FR-A- 1 571 339
- GB-A- 919 661
- US-A- 1 984 554
- US-A- 2 240 180
- US-A- 2 951 109
- US-A- 3 854 002
- US-A- 3 909 501
- US-A- 4 567 321
- PATENT ABSTRACTS OF JAPAN M-659, page 157; & JP,A,62 175 392 (KITSUKOU SEISAKUSHO), 1 August 1987

## Description

### Technical field

This invention relates to an electrical conductor, a flexible conductive track, electrical connector and electrical distribution system.

The invention has particular but not exclusive application to an electrical conductor, a flexible conductive track, electrical connector and electrical distribution system for use in walls, floors, ceilings, skirting boards and the like for distribution of electrical power and/or electrical signals.

### Background Art

It is known for to provide flexible conductive track for such purposes. International application PCT/AU92/00414 in the name of Mass International Pty Ltd (now published as WO 93 03517 A) is an example of a known flexible conductive track.

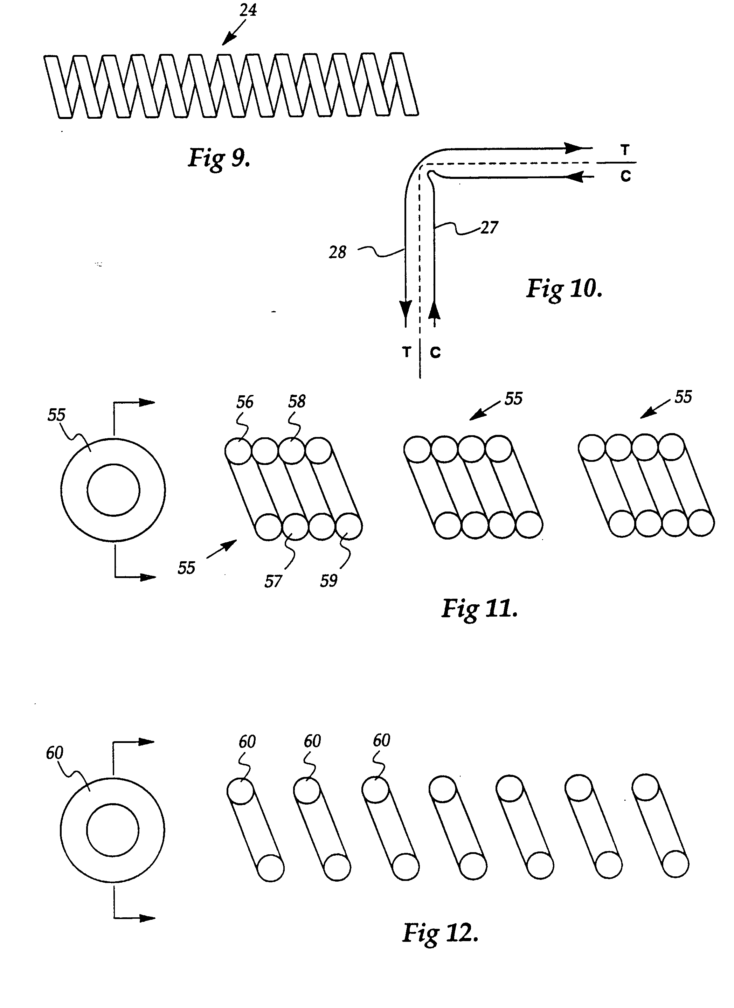

The invention of International application PCT/AU92/00414 provides an insulating housing adapted to be bent at right angles without the need to provide corner adaptors. The housing of International application PCT/AU92/00414 has a plurality of longitudinally extending recesses which close when the flexible conductive track is bent in the manner illustrated in FIGS 8 to 10 of International application PCT/AU92/00414. The flexible conductor illustrated in FIG 11 of International application PCT/AU92/00414 is a solid copper wire supporting a conductive blade having cutouts along its length.

German patent specification DE 40 13 370 illustrates an insulating housing having helical shaped spring conductors retained in slots in the housing by opposed lips at the slot entrance.

### Summary of invention

The present invention aims to provide an alternative electrical conductor, flexible conductive track, electrical connector and electrical distribution system which will be reliable and efficient in use.

This invention in one aspect resides broadly in an electrical bus distributor assembly including:-
an elongate insulated housing;
a longitudinally extending slot in the housing;
an elongate flexible conductor assembly located in the slot, the conductor assembly comprising a coiled hollow conductor, and
fastening means for fastening the coiled hollow conductor in the slot:
**characterised in that** said insulated housing is flexible and the fastening means includes an insulating member which substantially fills the core of the hollow conductor and extends through the open coils of the hollow conductor to form at least one longitudinally extending insulated portion along the exterior of the hollow conductor, the exterior of the conductor not being covered by the insulating member in at least one longitudinally extending direction for the establishment of electrical contact with the conductor.

The coiled hollow conductor may be retained within the slot by any suitable means. This could be by adhesives or by ultrasonic welding. In one preferred embodiment the insulating member constituting the fastening means is a portion of the insulated housing. Alternatively the insulating member and the insulated housing are co-extruded.

In a preferred embodiment the elongate flexible insulated housing has a plurality of longitudinally extending slots extending inwardly from one face thereof, a coiled hollow conductor being located in at least one of the slots in the one face, and at least one longitudinally extending slot extending inwardly from a substantially opposite face thereof; the arrangement being such that the width of the slots decrease when the bus distributor assembly is bent in a plane substantially perpendicular to the slots.

The coiled hollow conductor may be either a closed coil or an open coil and may be formed from substantially flat conductive material. As used herein the expression "flat conductive material" includes strip-like and ribbon-like material. The coiled hollow conductor may be a single strand or may be formed from a plurality of strands.

It is also preferred that the insulating member extends through the open coils of the hollow conductor to form a longitudinally extending guide portion along the exterior of the hollow conductor for guiding socket means of an electrical connector for establishing electrical contact with the coiled hollow conductor.

In another aspect this invention resides broadly in an electrical distribution system including:-
a support housing having at least one longitudinally extending chamber for receiving and supporting an electrical bus distributor assembly;
an electrical bus distributor assembly located in the chamber and spaced from a wall of the chamber to define a substantially continuous longitudinally extending access channel therewith, and
at least one electrical connector having a plurality of socket means for establishing electrical contact with a respective coiled hollow conductor, the arrangement being such that the socket means are associated with tines receivable within the access channel to prevent the electrical contact being established, the plug assembly being rotatable within the access channel to establish the electrical contact;
**characterised in that**
the electrical bus distributor assembly is as defined above.

In a further aspect this invention resides broadly in an electrical distribution system including:-
a support housing having at least one longitudinally extending chamber for receiving and supporting an electrical bus distributor assembly;
an electrical bus distributor assembly located in the chamber and spaced from a wall of the chamber to define a substantially continuous longitudinally extending access channel therewith, and
an electrical connector adapted to be received within the access channel, the connector including:-
a support member;
a plurality of tines extending radially from the support member;
a plurality of socket means respectively associated with the tines for establishing electrical contact with a respective coiled hollow conductor;
the arrangement being such that the tines are receivable within an access channel adjacent the distributor assembly to prevent the electrical contact being established, the electrical connector being rotatable within the access channel to establish the electrical contact;
**characterised in that**
the electrical bus distributor assembly is as defined above.

It is preferred that one of the socket means makes electrical connection with an earthed conductor in the distributor assembly upon rotation of the connector before the others of the socket means make electrical connection respectively with the others of the coiled hollow conductors.

The socket means may be adapted to releasably engage the coiled hollow conductors and to be restrained thereon and may also include rotation limiting means adapted to prevent rotation of the electrical connector beyond an orientation wherein the tines are substantially perpendicular to the coiled hollow conductors.

The rotation limiting means could be an abutment adapted to engage with a stop located on the bus distributor assembly or could be other suitable means. However it is preferred that the rotation limiting means is a cam having stop means. The cam may be a peripheral flange on the support member and the stop means may be a tangential extension of the peripheral portion of the flange.

In another preferred embodiment the electrical connector includes a guard assembly pivotally mounted on the support member and adapted to pivot from a position substantially encompassing the tines and the socket means upon engagement of the guard assembly with the bus distributor assembly upon rotation of the connector.

The rotation limiting means may include a pin and a slot one of which is associated with the guard assembly and adapted to rotate therewith. In a preferred embodiment the abutment of the rotation limiting means is a pin on the guard member adapted to pivot therewith and the stop is an arcuate slot in the connector housing. Alternatively the pin can be on the housing and the slot on the rotation limiting means.

In a further aspect this invention resides broadly in an elongate flexible conductor assembly including:-
an open coiled hollow conductor, and
an insulating member;
**characterised in that**
the insulating member substantially fills the core of the hollow conductor and extends through the open coils thereof to form at least one longitudinally extending insulated portion along the exterior of the hollow conductor, the exterior of the conductor not being covered by the insulating member in at least one longitudinally extending direction for the establishment of electrical contact with the conductor.

### Description of the drawings

In order that this invention may be more easily understood and put into practical effect, reference will now be made to the accompanying drawings which illustrate a preferred embodiment of the invention, wherein:-
FIGS 1 to 4 are perspective views of an electrical distribution system in accordance with the invention, illustrating the manner of establishing an electrical connection;
FIGS 5 and 7 are perspective views of an electrical distributor;
FIG 6 is a perspective view of a pronged fastener for fastening a conductor within a housing;
FIG 8 is a perspective view of a close coiled conductor;
FIG 9 is a side view of an open coiled conductor in accordance with the invention;
FIG 10 illustrates the tension and compression of a coiled conductor when bent;
FIGS 11 to 19, and FIGS 30 and 31 are illustrations of various coiled conductors including arrangements for locating the conductors in a housing;
FIG 20 is a side view of another open coiled conductor in accordance with the invention;
FIGS 21 and 22 are side and end views respectively of one form of an electrical connector in accordance with the invention;
FIGS 23 and 24 are end and side views respectively of another form of electrical connector in accordance with the invention;
FIG 25 is a cross-sectional elevation of an electrical distribution system located in a skirting board;
FIG 26 is a cross-sectional elevation illustrating a plug connected in the electrical distribution system;
FIG 27 illustrates the incremental electrical connection during rotation of the electrical connector;
FIG 28 illustrates an electrical distribution assembly located in a floor; and
FIG 29 illustrates an electrical distribution assembly located in a ceiling for track lighting or the like.

### Description of the preferred embodiments

The mechanical operation of the electrical distribution assembly is explained in international application PCT/AU92/00414.

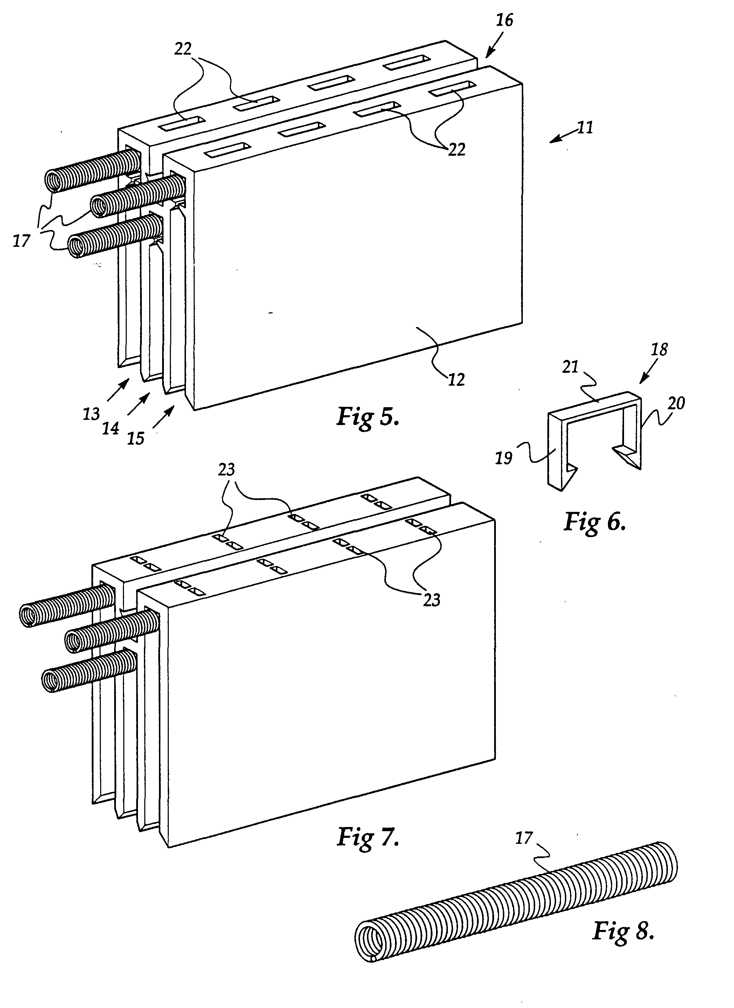

As can be seen in FIG 5, a flexible conductive track 11 includes close coiled hollow conductors 17 mounted or otherwise fastened at the ends of longitudinally extending slotted recesses 13 to 15 formed in an insulating housing 12. A further slotted recess 16 is located opposite central recess 14.

The coiled hollow conductors 17 are preferably made from copper or aluminium.

The close coiled conductors can be fastened within the slotted recesses by means of staples 18 illustrated in FIG 6. The staples are channel shaped with a pair of pronged arms 19 and 20 extending from a base 21. Staples 21 engage the conductors through longitudinally extending slots 22 or, as can be seen in FIG 7, through transverse slots 23. In the former case the conductors are fastened by the prongs locating between the conductor coils, whereas in the latter the conductors are fastened by the pronged arms clamping over the outer surface of the coiled conductor.

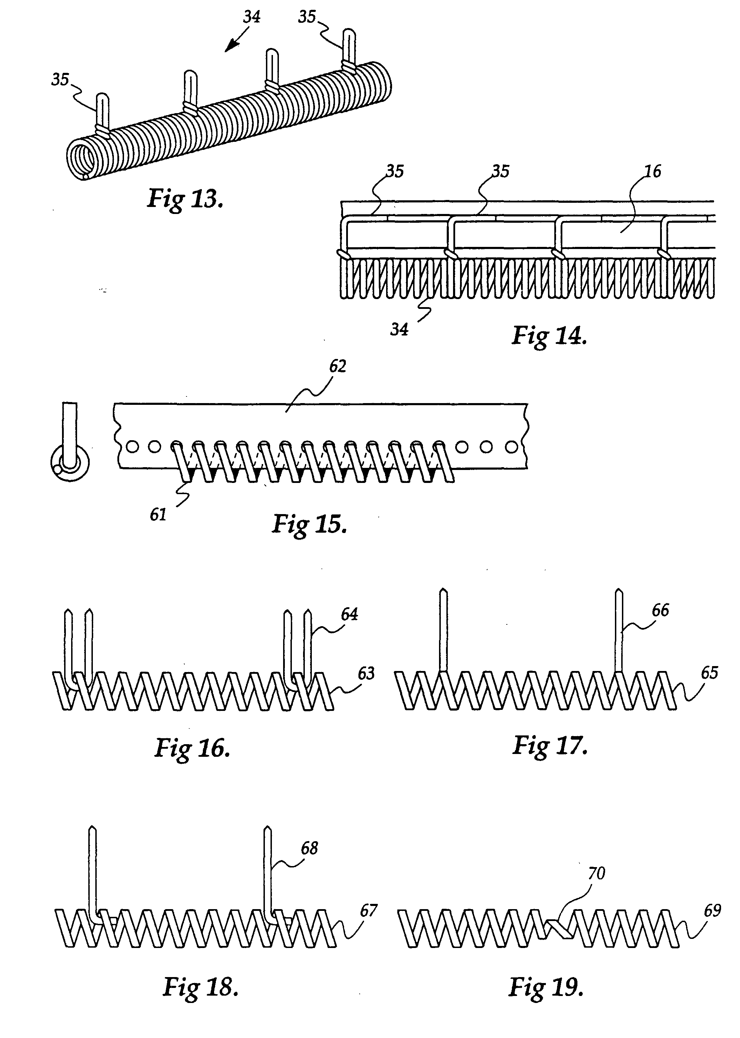

Alternatively as seen in FIGS 13, a close coiled hollow conductor 34 has regularly spaced larger loops 35 adapted to pass through slotted openings in the top of housing 16 and be bent over to retain conductor 34 therein. FIG 14 illustrates this arrangement with an open coiled conductor. The loops can be twisted (not shown) to add rigidity to the coil.

As can be seen in FIG 9, an open coiled hollow conductor 24 is also suitable. As will be seen from reference to FIG 10, when a coiled hollow conductor is bent through an angle such as a right angle as illustrated, one side 28 of the coil extends in tension and the other side 27 compresses.

As can be seen in FIG 12, the coiled conductor can be a single strand 60 or as illustrated in FIG 11, coiled conductor 55 can be multi-strand conductor made of a number of individual strands 56 to 59. Consequently the current carrying capacity of the coil can be increased by increasing the number of strands whilst at the same time maintaining the diameter of both the wire and the coil to a selected design minimum.

Alternatively as can be seen in FIG 15, a coil conductor 61 can be threaded into an apertured plastic former 62 which is adapted to be attached within the insulated housing by heat, chemical or ultrasonic welding or other suitable fixing means.

FIGS 16 to 18 respectively illustrate coil conductors 63, 65 and 67 which are associated with pins 66 by welding or soldering (FIG 17), wires 64 which are fitted and twisted (FIG 16), and L-shaped lugs 68 fitted into the coil (FIG 18). Alternatively, as can be seen in FIG 19, coil 69 may be reduced at section 70 and an attaching wire (not shown) fitted and twisted.

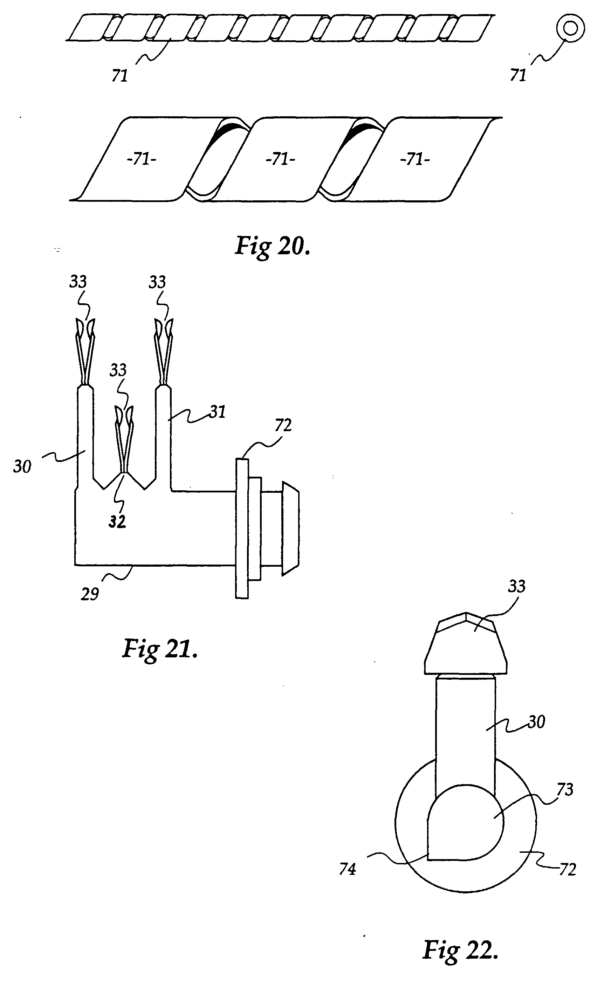

FIG 20 illustrates an open coil conductor 71 in the form of a coiled length of substantially flat material formed by roll flattening a length of round conductive material and coiling the flattened length to the desired diameter. Coiled "ribbon" strip gives a smaller coiled diameter than coiled "round" for the same cross-sectional area of conductor. Furthermore the linear length of coiled "ribbon" strip is less than that of an equivalent coiled "round", hence the linear resistance of the coiled length is less.

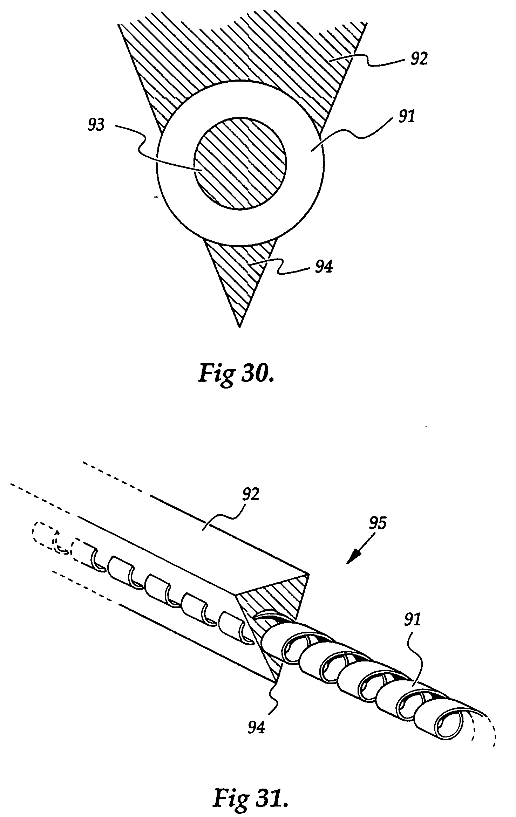

FIG 30 is a cross-sectional elevation illustrating an open coiled conductor embedded in a portion of an insulated housing. A portion of the insulated housing 92 can be co-extruded with coiled conductor 91 to substantially fill the interior of the coiled conductor at 93 and to form an angled guide 94 for assisting alignment of the arms of sockets 33. This method of fastening also enhances the strength and support of the coil. The coiled ribbon strip of conductor 91 provides a greater contact area than a coiled round conductor. Furthermore, the linear resistance, as tested, is less for a coiled ribbon strip than for a similar straight length of round conductor. This indicates a more direct current route through the coiled ribbon strip.

Alternatively as seen in FIG 31 which is a cut-away perspective view of an open coiled conductor embedded in a triangulated insulated sheathing, an insulated coiled conductor 95 is provided for affixing to an insulated housing such as illustrated in FIG 7 by chemical bonding, ultrasonic welding, co-extrusion or other suitable method. For example the insulated coiled conductor 95 can be provided in rolls as with conventional conductors, set up on the extrusion cross-head, the number of rolls depending on the nature of the distribution system, ie 2 wire, 3 wire, 4 wire etc, and joined with the housing as it is being extruded.

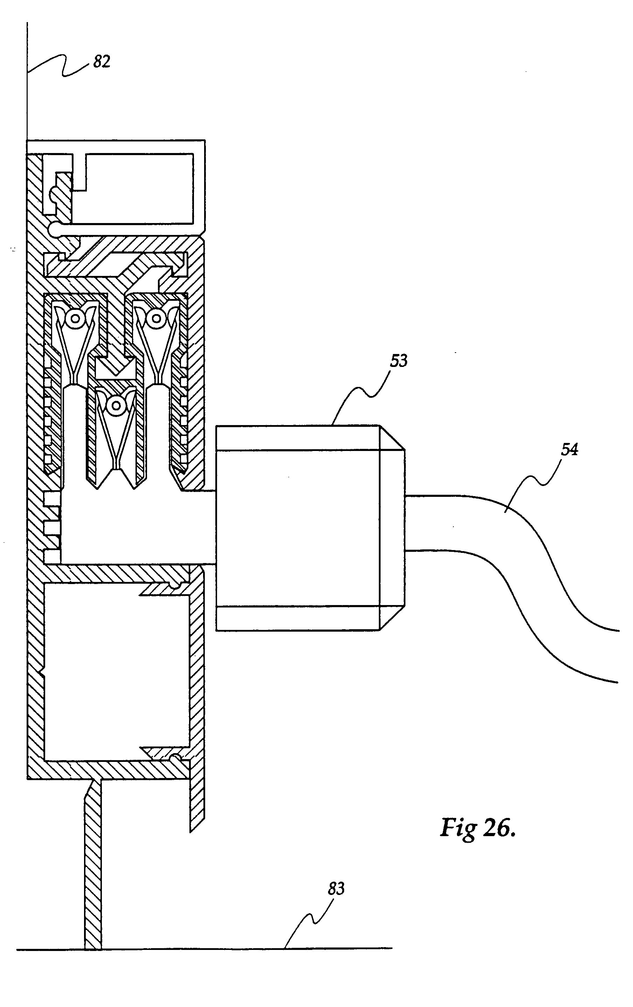

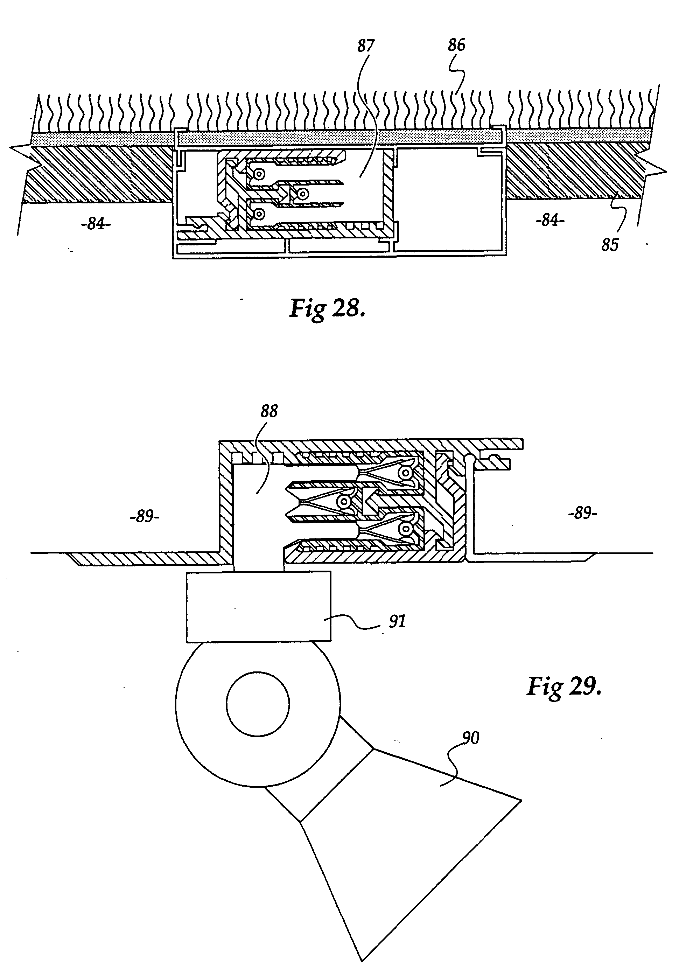

As can be seen in FIGS 21 and 22 a connector plug 29 engages the conductors in manner similar to that described in International application PCT/AU92/00414. Connector plug 29 has legs 30 to 32 carrying electrical connector sockets 33 adapted to snap over coiled conductors 71 as seen in FIG 26. An abutment in the form of a peripheral flange 72 is adapted to bear against the outer casing or skirting board and a flange 73 having a right-angle stop 74 is adapted to prevent the electrical plug 29 overcentering as can be seen in FIG 27.

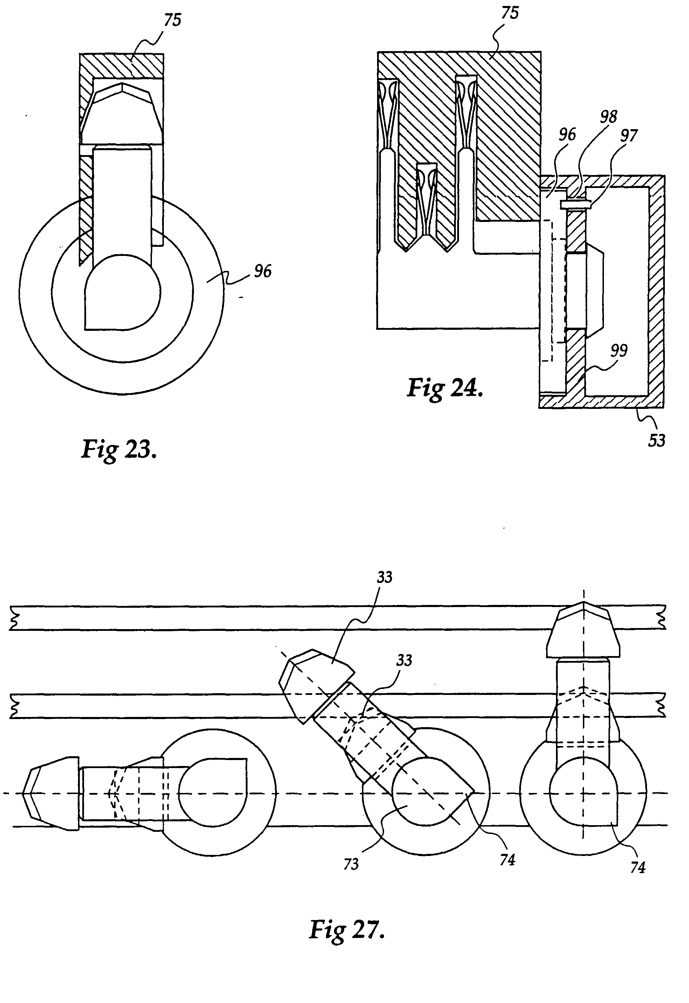

FIGS 23 and 24 illustrate an alternative connector having a guard 75 mounted on a pivot 96 and attached to the connector to be free to rotate relative to the legs. In use the guide 74 both protects the tines and guides them during turning within the bus assembly.

As can be seen in FIG 27 the arrangement is such that the earth conductor on leg 32 is engaged first during pivoting of the plug. Correspondingly during removal of the electrical connector from the electrical distributor, the earth conductor is the last to be disengaged. Flange 73 provides a camming action which stops when right-angled stop 74 engages with a mating surface on the distributor assembly or skirting board whereby rotation of the plug beyond the 90° point is prevented. This is also facilitated by the provision of a pin 97 on pivot 96 adapted to rotate with guard 75 within a quadrant arcuate slot 98 located in the wall 99 of plug housing 53. The slot is oriented so that the tines do not rotate through more than 90° from the disconnected to the connected positions.

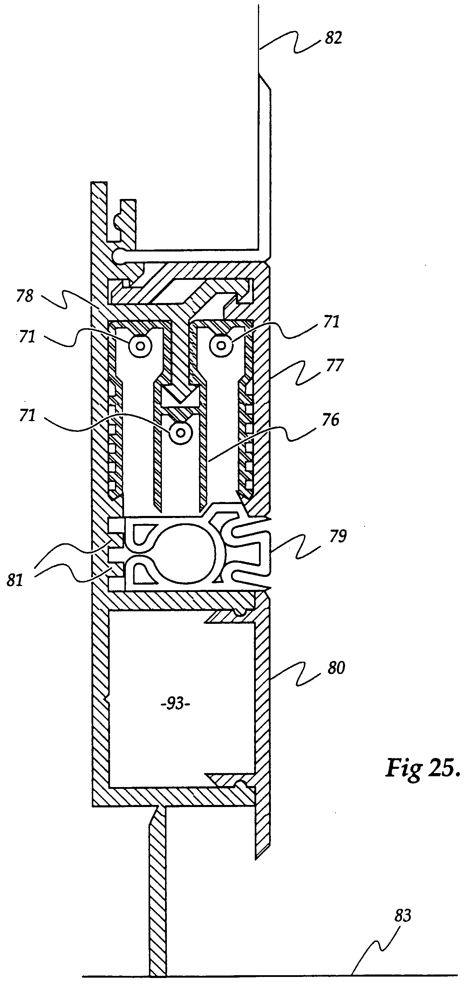

As can be seen in FIG 25, the bus distributor assembly 76 is supported within skirting board support housing 78. Cover piece 77 supports the distributor assembly 76 and a cover strip 79 fits within an access channel beneath the bus distributor 76 which, in use, receives the electrical connector. Duct cover 80 covers duct 93. Longitudinally extending ribs 81 are located on the interior wall of the housing 78 and serve to prevent inadvertent or accidental insertion of flexible objects into the housing. This enhances safety and guards against accidental electrocution of young children inserting electrically conductive material into the bus distributor assembly.

FIG 26 illustrates a connector plug 53 positioned in the distributor assembly and rotated through 90° to establish electrical contact. The distributor assembly illustrated in FIG 26 extends away from wall 82 comparison with that illustrated in FIG 25 where the assembly is flush with wall 82.

As can be seen in FIG 28, a distribution assembly 87 may be located in the floor 84 to be flush with carpet 86 above underlay 85.

Alternatively, as seen in FIG 29, a bus distributor assembly 88 may be located in ceiling 89 with connector 91 providing power to an electric light 90.

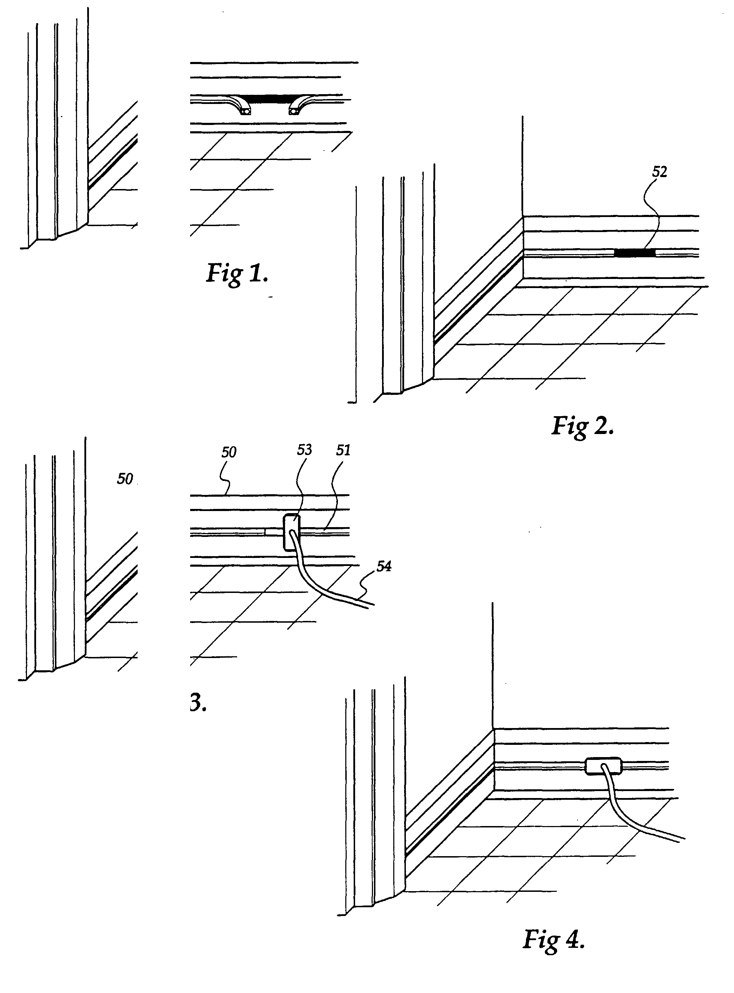

In use as can be seen in FIGS 1 to 4, flexible conductive track is located in skirting board 50. Cover strip is cut at 52 to leave a gap. Electrical connector 53 attached to electrical lead 54 is inserted in gap 52 as seen in FIG 3 and rotated through 90° as seen in FIG 4.

It will be appreciated that in use the flexible conductive track can be bent through a substantial angle and the coiled hollow conductors will on one side be compressed and on the other be extended without permanent distortion because of the inherent resilience of the coiled hollow conductor.

The electromagnetic field associated with the coiled hollow conductor is more concentrated than that of a straight conductor thereby decreasing level of interference caused to data cabling by conventional electrical power distribution systems.

It will also be appreciated that the electrical distribution system in accordance with the present invention has other advantages. The distribution assembly can be a single or a multi-level cassette so that it is possible to add additional cassettes within a single housing to distribute a range of electrical services. For example power in one circuit, audio in another circuit and computer cabling in a third circuit. Because of the concentration of the electro-magnetic field within the coil conductor, coincident housing of a multi-cable system including data and communications systems is feasible.

Furthermore, the wiping action of the tines over the conductors provides a self-cleaning effect and removes oxide from the conductor.

In use the adaptability of the flexible housing of the present invention to bend through an angle, typically through a right angle or other angles including a 180 degree return, avoids the requirement of prior art systems with rigid conductors to cut and fit adaptors at the corners of a room. The continuity of the conductor assembly results in improved electrical characteristics and also simplifies installation thereby lowering material and labour installation costs.

The distribution system of the present invention provides a useful alternative to known systems. It is adaptable for use in floors and ceilings as well as skirting boards, and can be used as a light-track for lighting systems or for transmission of audio signals in sound systems. It will be appreciated that each of the above systems can be incorporated in a multi-chamber housing.

The coiled conductor of the present invention is an improvement on the conductor illustrated in International application PCT/AU92/00414 wherein, when bent through substantially a right angle, the inside flexible conductor of the conductor assembly can become kinked because the peripheral extent of the bend on the inside is less than that of the middle and outer conductors.

It will of course be realised that whilst the above has been given by way of an illustrative example of this invention, all such and other modifications and variations hereto, as would be apparent to persons skilled in the art, are deemed to fall within the broad scope of this invention, which is defined by the appended claims.

## Claims

1. An electrical bus distributor assembly including :-
an elongate insulated housing (11) ;
a longitudinally extending slot (13, 14, 15) in said housing;
an elongate flexible conductor assembly located in said slot, said conductor assembly comprising a coiled hollow conductor (17) , and
fastening means for fastening said coiled hollow conductor in said slot :
**charaterised in that** the insulated housing is flexible and said fastening means includes an insulating member which substantially fills the core of said hollow conductor and extends through the open coils of said hollow conductor to form at least one longitudinally extending insulated portion (92) along the exterior of said hollow conductor, the exterior of said conductor not being covered by said insulating member in at least one longitudinally extending direction for the establishment of electrical contact with said conductor.

2. An electrical bus distributor assembly as claimed in claim 1,
**characterised in that**
said insulating member includes a portion of said insulated housing.

3. An electrical bus distributor assembly as claimed in claim 1,
**characterised in that**
said insulating member and said insulated housing are co-extruded.

4. An electrical bus distributor assembly as claimed in claim 1,
**characterised in that**
said elongate flexible insulated housing has a plurality of longitudinally extending slots (13,14,15) extending inwardly from one face thereof, a coiled hollow conductor (17) being located in at least one of the slots in said one face, and at least one longitudinally extending slot (16) extending inwardly from a substantially opposite face thereof; the arrangement being such that the width of said slots decrease when the bus distributor assembly is bent in a plane substantially perpendicular to said slots.

5. An electrical bus distributor assembly as claimed in claim 1,
**characterised in that**
said insulating member extends through the open coils of said hollow conductor to form a longitudinally extending guide portion (94) along the exterior of said hollow conductor for guiding socket means (33) of an electrical connector for establishing electrical contact with said coiled hollow conductor.

6. An electrical bus distributor assembly as claimed in claim 1,
**characterised in that**
said coiled hollow conductor is formed from substantially flat conductive material.

7. An electrical bus distributor assembly as claimed in claim 1,
**characterised in that**
said coiled hollow conductor is formed from a plurality of strands.

8. An electrical distribution system including:-
a support housing (78) having at least one longitudinally extending chamber for receiving and supporting an electrical bus distributor assembly;
an electrical bus distributor assembly (76) located in said chamber and spaced from a wall of said chamber to define a substantially continuous longitudinally extending access channel therewith, and
at least one electrical connector having a plurality of socket means (33) for establishing electrical contact with a respective coiled hollow conductor, the arrangement being such that said socket means are associated with tines (30,31,32) receivable within said access channel to prevent said electrical contact being established, said electrical connector being rotatable within said access channel to establish said electrical contact;
**characterised in that**
said electrical bus distributor assembly is as claimed in claim 1.

9. An electrical distribution system including:-
a support housing (78) having at least one longitudinally extending chamber for receiving and supporting an electrical bus distributor assembly;
an electrical bus distributor assembly (76) located in said chamber and spaced from a wall of said chamber to define a substantially continuous longitudinally extending access channel therewith, and
an electrical connector adapted to be received within said access channel, said connector including:-
a support member (29);
a plurality of tines (30,31,32) extending radially from said support member;
a plurality of socket means (33) respectively associated with said tines for establishing electrical contact with a respective coiled hollow conductor;
the arrangement being such that said tines are receivable within an access channel adjacent said distributor assembly to prevent said electrical contact being established, said electrical connector being rotatable within said access channel to establish said electrical contact;
**characterised in that**
said electrical bus distributor assembly is as claimed in claim 1.

10. An electrical distribution system as claimed in claim 9,
**characterised in that**
one of said socket means makes electrical connection with an earthed conductor in said distributor assembly upon rotation of said connector before the others of said socket means make electrical connection respectively with the others of said coiled hollow conductors.

11. An electrical distribution system as claimed in claim 10,
**characterised in that**
said electrical connector includes rotation limiting means (73,74) adapted to prevent rotation of said electrical connector beyond an orientation wherein said tines are substantially perpendicular to said coiled hollow conductors.

12. An electrical distribution system as claimed in claim 11,
**characterised in that** said rotation limiting means is a cam (73) having stop means (74).

13. An electrical distribution system as claimed in claim 12,
**characterised in that**
said cam is a peripheral flange on said support member and said stop means is a tangential extension of the peripheral portion of said flange.

14. An electrical distribution system as claimed in claim 9,
**characterised in that**
said electrical connector includes a guard assembly (75) pivotally mounted on said support member and adapted to pivot from a position substantially encompassing said tines and said socket means upon engagement of said guard assembly with said bus distributor assembly upon rotation of said connector.

15. An electrical distribution system as claimed in claim 14,
**characterised in that**
said rotation limiting means includes a pin (97) and a slot (98) one of which is associated with said guard assembly and adapted to rotate therewith.

16. An elongate flexible conductor assembly including:-
an open coiled hollow conductor (91), and
an insulating member;
**characterised in that**
said insulating member substantially fills the core of said hollow conductor and extends through the open coils thereof to form at least one longitudinally extending insulated portion (92) along the exterior of said hollow conductor, the exterior of said conductor not being covered by said insulating member in at least one longitudinally extending direction for the establishment of electrical contact with said conductor.

17. An elongate flexible conductor assembly as claimed in claim 16:-
**characterised in that**
said insulating member extends through the open coils of said hollow conductor to form a longitudinally extending guide portion (94) along the exterior of said hollow conductor for guiding socket means (33) of an electrical connector for establishing electrical contact with said coiled hollow conductor.

## Patentansprüche

1. Elektro-Sammelschienen-Verteileranordnung, umfassend:
ein längliches isoliertes Gehäuse (11);
einen in Längsrichtung verlaufenden Schlitz (13, 14, 15) in dem Gehäuse;
eine längliche flexible Leiteranordnung, welche in dem Schlitz angeordnet ist, wobei die Leiteranordnung einen Spulen-Hohlleiter (17) umfaßt, und
eine Befestigungseinrichtung zum Befestigen des Spulen-Hohlleiters in dem Schlitz:
dadurch gekennzeichnet, daß das isolierte Gehäuse flexibel ist und die Befestigungseinrichtung ein Isolierelement umfaßt, welches im wesentlichen den Kern des Hohlleiters füllt und durch die offenen Windungen des Hohlleiters hindurch verläuft, um mindestens einen in Längsrichtung verlaufenden isolierten Abschnitt (92) längs der Außenseite des Hohlleiters auszubilden, wobei die Außenseite des Leiters zur Herstellung eines elektrischen Kontakts mit dem Leiter in mindestens einer längsverlaufenden Richtung nicht durch das Isolierelement bedeckt wird.

2. Elektro-Sammelschienen-Verteileranordnung nach Anspruch 1,
dadurch gekennzeichnet, daß
das Isolierelement einen Abschnitt des isolierten Gehäuses umfaßt.

3. Elektro-Sammelschienen-Verteileranordnung nach Anspruch 1,
dadurch gekennzeichnet, daß
das Isolierelement und das isolierte Gehäuse gemeinsam extrudiert sind.

4. Elektro-Sammelschienen-Verteileranordnung nach Anspruch 1,
dadurch gekennzeichnet, daß
das längliche flexible Gehäuse eine Vielzahl in Längsrichtung verlaufender Schlitze (13, 14, 15), welche von einer Stirnfläche davon nach innen verlaufen, wobei ein Spulen-Hohlleiter (17) in mindestens einem der Schlitze in der einen Stirnfläche angeordnet ist, und mindestens einen in Längsrichtung verlaufenden Schlitz (16), welcher von einer im wesentlichen gegenüberliegenden Seite davon ausgehend nach innen verläuft, aufweist; wobei die Anordnung derart gestaltet ist, daß sich die Breite der Schlitze vermindert, wenn die Sammelschienen-Verteileranordnung in einer Ebene gebogen wird, welche im wesentlichen lotrecht zu den Schlitzen verläuft.

5. Elektro-Sammelschienen-Verteileranordnung nach Anspruch 1,
dadurch gekennzeichnet, daß
das Isolierelement durch die offenen Windungen des Hohlleiters hindurch verläuft, um einen in Längsrichtung verlaufenden Führungsabschnitt (94) längs der Außenseite des Hohlleiters zum Führen einer Fassungseinrichtung (33) einer elektrischen Verbindungsvorrichtung zum Herstellen eines elektrischen Kontakts mit dem Spulen-Hohlleiter auszubilden.

6. Elektro-Sammelschienen-Verteileranordnung nach Anspruch 1,
dadurch gekennzeichnet, daß
der Spulen-Hohlleiter aus einem im wesentlichen flachen leitenden Material ausgebildet ist.

7. Elektro-Sammelschienen-Verteileranordnung nach Anspruch 1,
dadurch gekennzeichnet, daß
der Spulen-Hohlleiter aus einer Vielzahl von Strängen ausgebildet ist.

8. Elektrisches Verteilungssystem, umfassend:
ein Stützgehäuse (78) mit mindestens einer in Längsrichtung verlaufenden Kammer zum Aufnehmen und Stützen einer Elektro-Sammelschienen-Verteileranordnung;
eine Elektro-Sammelschienen-Verteileranordnung (76), welche in der Kammer angeordnet ist und sich in Abstand von einer Wand der Kammer befindet, um einen im wesentlichen kontinuierlichen in Längsrichtung verlaufenden Zugangskanal damit zu bilden, und
mindestens eine elektrische Verbindungsvorrichtung mit einer Vielzahl von Fassungseinrichtungen (33) zum Herstellen eines elektrischen Kontakts mit einem jeweiligen Spulen-Hohlleiter, wobei die Anordnung derart gestaltet ist, daß die Fassungseinrichtungen mit Zinken (30, 31, 32) verbunden sind, welche innerhalb des Zugangskanals aufgenommen werden können, um zu verhindern, daß der elektrische Kontakt hergestellt wird, wobei die elektrische Verbindungsvorrichtung innerhalb des Zugangskanals drehbar ist, um den elektrischen Kontakt herzustellen;
dadurch gekennzeichnet, daß
die Elektro-Sammelschienen-Verteileranordnung gestaltet ist, wie in Anspruch 1 dargelegt.

9. Elektrisches Verteilungssystem, umfassend:
ein Stützgehäuse (78) mit mindestens einer in Längsrichtung verlaufenden Kammer zum Aufnehmen und Stützen einer Elektro-Sammelschienen-Verteileranordnung;
eine Elektro-Sammelschienen-Verteileranordnung (76), welche in der Kammer angeordnet ist und sich in Abstand von einer Wand der Kammer befindet, um einen im wesentlichen kontinuierlichen Zugangskanal damit zu definieren, und
eine elektrische Verbindungsvorrichtung, welche dazu gestaltet ist, innerhalb des Zugangskanals aufgenommen zu werden, wobei die Verbindungsvorrichtung umfaßt:
ein Stützelement (29);
eine Vielzahl von Zinken (30, 31, 32), welche radial von dem Stützelement ausgehend verlaufen;
eine Vielzahl von Fassungseinrichtungen (33), welche jeweils mit den Zinken verbunden sind, zum Herstellen eines elektrischen Kontakts mit einem jeweiligen Spulen-Hohlleiter;
wobei die Anordnung derart gestaltet ist, daß die Zinken innerhalb eines Zugangskanals aufgenommen werden können, welcher an die Verteileranordnung angrenzt, um zu verhindern, daß der elektrische Kontakt hergestellt wird, wobei die elektrische Verbindungsvorrichtung innerhalb des Zugangskanals drehbar ist, um den elektrischen Kontakt herzustellen;
dadurch gekennzeichnet, daß
die Elektro-Sammelschienenanordnung gestaltet ist, wie in Anspruch 1 dargelegt.

10. Elektrisches Verteilungssystem nach Anspruch 9,
dadurch gekennzeichnet, daß
eine der Fassungseinrichtungen eine elektrische Verbindung mit einem geerdeten Leiter in der Verteileranordnung herstellt, wenn eine Drehung der Verbindungsvorrichtung erfolgt, bevor die anderen der Fassungseinrichtungen eine elektrische Verbindung jeweils mit den anderen der Spulen-Hohlleiter herstellen.

11. Elektrisches Verteilungssystem nach Anspruch 10,
dadurch gekennzeichnet, daß
die elektrische Verbindungsvorrichtung eine Drehungsbegrenzungseinrichtung (73, 74) umfaßt, welche dazu gestaltet ist, eine Drehung der elektrischen Verbindungsvorrichtung über eine Ausrichtung, bei welcher die Zinken im wesentlichen lotrecht zu den Spulen-Hohlleitern angeordnet sind, hinaus zu verhindern.

12. Elektrisches Verteilungssystem nach Anspruch 11,
dadurch gekennzeichnet, daß
die Drehungsbegrenzungseinrichtung eine Nocke (73) mit einer Anhalteeinrichtung (74) ist.

13. Elektrisches Verteilungssystem nach Anspruch 12,
dadurch gekennzeichnet, daß
die Nocke ein Umfangsflansch auf dem Stützelement ist und die Anhalteeinrichtung eine tangentiale Erweiterung des Umfangsabschnitts des Flansches ist.

14. Elektrisches Verteilungssystem nach Anspruch 9,
dadurch gekennzeichnet, daß
die elektrische Verbindungsvorrichtung eine Schutzanordnung (75) umfaßt, welche schwenkbar auf dem Stützelement angebracht und dazu gestaltet ist, von einer Position ausgehend zu schwenken, bei welcher die Zinken und die Fassungseinrichtung im wesentlichen umfaßt werden, wenn ein Eingriff der Schutzanordnung mit der Sammelschienen-Verteileranordnung erfolgt, wenn eine Drehung der Verbindungsvorrichtung erfolgt.

15. Elektrisches Verteilungssystem nach Anspruch 14,
dadurch gekennzeichnet, daß
die Drehungsbegrenzungseinrichtung einen Stift (97) und einen Schlitz (98) umfaßt, wobei einer von diesen mit der Schutzanordnung verbunden und dazu gestaltet ist, sich damit zu drehen.

16. Längliche flexible Leiteranordnung, umfassend:
einen offenen Spulen-Hohlleiter (91) und
ein Isolierelement;
dadurch gekennzeichnet, daß
das Isolierelement im wesentlichen den Kern des Hohlleiters füllt und durch die offenen Windungen davon hindurch verläuft, um mindestens einen in Längsrichtung verlaufenden Isolierabschnitt (92) längs der Außenseite des Hohlleiters auszubilden, wobei die Außenseite des Leiters zur Herstellung eines elektrischen Kontakts mit dem Leiter in mindestens einer längsverlaufenden Richtung nicht durch das Isolierelement bedeckt ist.

17. Längliche flexible Leiteranordnung nach Anspruch 16:
dadurch gekennzeichnet, daß
das Isolierelement durch die offenen Windungen des Hohlleiters hindurch verläuft, um einen in Längsrichtung verlaufenden Führungsabschnitt (94) längs der Außenseite des Hohlleiters zum Führen einer Fassungseinrichtung (33) einer elektrischen Verbindungsvorrichtung zum Herstellen eines elektrischen Kontakts mit dem Spulen-Hohlleiter auszubilden.

## Revendications

1. Distributeur d'alimentation électrique comportant :
. un boîtier isolé de forme allongée (11) ;
. une fente (13,14,15) s'étendant longitudinalement dans le boîtier ;
. un élément conducteur flexible de forme allongée logé dans la fente, cet élément conducteur comprenant un conducteur creux bobiné (17) ; et
. un moyen de fixation pour fixer le conducteur creux bobiné dans la fente ;
caractérisé en ce que le boîtier isolé est flexible et en ce que le moyen de fixation comporte un corps isolant qui remplit sensiblement le noyau du conducteur creux et s'étend à travers les enroulements ouverts du conducteur creux pour former au moins une partie isolée (92) s'étendant longitudinalement le long de l'extérieur du conducteur creux, l'extérieur du conducteur n'étant pas couvert par le corps isolant dans au moins une direction s'étendant longitudinalement pour l'établissement d'un contact électrique avec le conducteur.

2. Distributeur selon la revendication 1, caractérisé en ce que le corps isolant comprend une partie du boîtier isolé.

3. Distributeur selon la revendication 1, caractérisé en ce que le corps isolant et le boîtier isolé sont co-extrudés.

4. Distributeur selon la revendication 1, caractérisé en ce que le boîtier isolé flexible de forme allongée présente une pluralité de fentes (13,14,15) dirigées longitudinalement et s'étendant vers l'intérieur à partir d'une face de celui-ci, un conducteur creux bobiné (17) étant logé dans au moins une des fentes de cette face, et au moins une fente (16) dirigée longitudinalement s'étendant vers l'intérieur à partir d'une face sensiblement opposée de celui-ci ; l'ensemble étant tel que la largeur des fentes décroît lorsque le distributeur d'alimentation électrique est plié dans un plan sensiblement perpendiculaire aux fentes.

5. Distributeur selon la revendication 1, caractérisé en ce que le corps isolant s'étend à travers les bobines ouvertes du conducteur creux pour former une zone de guidage (94) le long de l'extérieur du conducteur creux pour guider le moyen de réception (33) d'un connecteur électrique permettant d'établir un contact électrique avec le conducteur creux bobiné.

6. Distributeur selon la revendication 1, caractérisé en ce que le conducteur creux bobiné est formé à partir d'un matériau conducteur sensiblement plat.

7. Distributeur selon la revendication 1, caractérisé en ce que le conducteur creux bobiné est formé à partir d'une pluralité de brins.

8. Système de distribution électrique comportant :
. un boîtier-support (78) présentant au moins une chambre s'étendant longitudinalement pour recevoir et supporter un distributeur d'alimentation électrique ;
. un distributeur d'alimentation électrique (76) logé dans la chambre et espacé d'une paroi de la chambre afin de définir avec celle-ci un conduit d'accès sensiblement continu s'étendant longitudinalement ; et
. au moins un connecteur électrique présentant une pluralité de moyens de réception (33) permettant d'établir un contact électrique avec chaque conducteur creux bobiné, l'ensemble étant agencé de telle façon que les moyens de réception (33) sont associés avec des dents (30,31,32) pour les recevoir à l'intérieur du conduit d'accès afin d'empêcher que le contact électrique ne soit établi, le connecteur électrique pouvant pivoter à l'intérieur du conduit d'accès pour établir le contact électrique ;
caractérisé en ce que le distributeur d'alimentation électrique est tel que revendiqué dans la revendication 1.

9. Système de distribution électrique comportant :
. un boîtier-support (78) présentant au moins une chambre s'étendant longitudinalement pour recevoir et supporter un distributeur d'alimentation électrique ;
. un distributeur d'alimentation électrique (76) logé dans la chambre et espacé d'une paroi de la chambre afin de définir avec celle-ci un conduit d'accès sensiblement continu s'étendant longitudinalement ; et
. au moins un connecteur électrique adapté pour être reçu à l'intérieur du conduit d'accès, ce connecteur comportant :
. un support (29) ;
. une pluralité de dents (30,31,32) s'étendant radialement à partir du support (29) ;
. une pluralité de moyens de réception (33) associés respectivement avec chaque dent pour l'établissement d'un contact électrique avec un conducteur creux bobiné respectif ;
l'arrangement étant tel que les dents sont aptes à être reçues à l'intérieur d'un conduit d'accès adjacent au distributeur pour empêcher que le contact électrique ne soit établi, le connecteur électrique pouvant pivoter à l'intérieur du conduit d'accès pour établir le contact électrique ;
caractérisé en ce que le distributeur d'alimentation électrique est tel que revendiqué dans la revendication 1.

10. Système de distribution électrique selon la revendication 9, caractérisé en ce que l'un des moyens de réception réalise la connexion électrique avec un conducteur mis à la terre dans le distributeur par la rotation du connecteur avant que les autres moyens de réception ne réalisent la connexion électrique respectivement avec chacun des autres conducteurs creux bobinés.

11. Système de distribution électrique selon la revendication 10, caractérisé en ce que le connecteur électrique présente un moyen de limitation de la rotation (73,74) adapté pour empêcher la rotation du connecteur électrique au-delà d'une direction dans laquelle les dents sont sensiblement perpendiculaires aux conducteurs creux bobinés.

12. Système de distribution électrique selon la revendication 11, caractérisé en ce que le moyen de limitation de la rotation est une came (73) présentant un moyen d'arrêt (74).

13. Système de distribution électrique selon la revendication 12, caractérisé en ce que la came est conformée selon un rebord périphérique situé sur le support et en ce que le moyen d'arrêt est une extension tangentielle de la partie périphérique de ce rebord.

14. Système de distribution électrique selon la revendication 9, caractérisé en ce que le connecteur électrique comporte un dispositif protecteur (75) monté à pivotement sur le support pour pivoter à partir d'une position enveloppant sensiblement les dents et les moyens de réception par l'engagement du dispositif protecteur avec le distributeur d'alimentation dès la rotation de ce connecteur.

15. Système de distribution électrique selon la revendication 14, caractérisé en ce que le moyen de limitation de la rotation comporte une goupille (97) et une encoche (98), l'une d'entre elles étant associée avec le dispositif protecteur pour pivoter avec lui.

16. Elément conducteur flexible de forme allongée comprenant :
. un conducteur creux bobiné ouvert (91) ; et
. un corps isolant ;
caractérisé en ce que le corps isolant remplit sensiblement le noyau du conducteur creux et s'étend à travers les enroulements ouverts de celui-ci pour former au moins une partie isolée (92) s'étendant longitudinalement le long de l'extérieur du conducteur creux, l'extérieur du conducteur n'étant pas couvert par le corps isolant dans au moins une direction s'étendant longitudinalement pour l'établissement d'un contact électrique avec le conducteur.

17. Dispositif conducteur flexible de forme allongée selon la revendication 16 caractérisé en ce que le corps isolant s'étend à travers les bobines ouvertes du conducteur creux pour former une zone de guidage (94) s'étendant longitudinalement le long de l'extérieur du conducteur creux afin de guider les moyens de réception (33) d'un connecteur électrique permettant d'établir le contact électrique avec le conducteur creux bobiné.
